# EUROPEAN PATENT APPLICATION

(11) **EP 3 148 237 A1**
(43) Date of publication of application: **29.03.2017**
(21) Application number: 15306508.1
(22) Date of filing: 28.09.2015
(51) Int. Cl.: H04W 12/12, H04W 12/10, H04L 29/06

(54) **MONITORING OF ATTACKS ON BLUETOOTH BEACON DEVICES**

(71) Applicant: ALCATEL LUCENT, 92100 Boulogne-Billancourt (FR)
(72) Inventor: MATHUR, Akhil, DUBLIN (IE)
(74) Representative: Mouney, Jérôme

(57) **Abstract**

For a monitoring of attacks on a beacon transmitter belonging to a set of beacon transmitters that are able to communicate with each other, a beacon transmitter is able to
generate a reset message (RMes), containing specific values for a universally unique identifier, a major identifier and a minor identifier, the specific values of the major identifier and the minor identifier indicating that the reset message is intended for replacing the current value of the universally unique identifier of other beacon transmitters (BT) by the specific value of the universally unique identifier, if a received advertisement message broadcast from an entity (ME) is similar to an advertisement message broadcast by the beacon transmitter,
broadcast the generated reset message (RMes) using a short range wireless communication protocol for reception by other beacon transmitters of said set of beacon transmitters.

## Description

### FIELD OF THE INVENTION

The present invention pertains to monitoring and mitigation of attacks on beacon devices, for example spoofing attacks on Bluetooth beacon devices.

### BACKGROUND

For communicating with other mobile devices over relatively short distances, Bluetooth® wireless technology has become increasingly popular, allowing a mobile computing device to communicate wirelessly with another nearby device without having to route the communication through a network of remote devices.

Bluetooth beacon devices, more especially Bluetooth Low Energy (BLE) beacon devices are increasingly becoming a preferred technology choice for indoor localization and delivering hyper-contextual content to users based on their location. BLE beacon devices broadcast their identifier to nearby portable electronic devices and allow smartphones, tablets and other devices to perform actions when in close proximity to BLE beacon devices.

BLE communication consists primarily of "advertisements", or small packets of data, which are broadcast at a regular interval by beacons via radio waves. Beacon devices that want to be "discovered" can broadcast data packets in set intervals. These packets are meant to be collected by devices like smartphones or other 'receiver' beacon devices, where they can be used for a variety of applications to trigger things like pushing offers, safety messages or user analytics.

As per the current technology standard, an advertisement frame comprises three IDs:
a) universally unique identifier (UUID): It is a 16 byte identifier used to differentiate beacons of different brands.
b) Major identifier (major ID): It is a 2 byte identifier to identify beacon devices at a certain location, e.g. beacons of brand X in New York vs. beacons of brand X Tokyo.
c) Minor identifier (minor ID): It is a 2 byte identifier to identify the individual beacon devices at the location specified by major identifier.

Receiver beacon devices would listen for advertisement messages from BLE beacon devices, and if they find a message satisfying a given criteria (e.g. intended UUID, major identifier), then they would try to establish connection with a server offering services related to the beacon.

A current problem is that the beacon advertisement frame is transmitted in plain text, and can easily be spoofed using a regular computer. As a result of this spoofing ability, an attacker can find out the UUID, major and minor ID for a set of beacon devices, masquerade as a legitimate beacon transmitter, and send 'fake' beacon advertisement packets towards the beacon receivers.

In an example wherein the beacon receiver is a smartphone to whom a grocery store wants to push discount coupons for a certain product. However, this spoofing attack could potentially result in the receiver getting connected with the malicious attacker, who may send fake coupons or competitor's coupons to the smartphone.

Some manufacturers implement rotating UUIDs in the beacon transmitters, i.e. they are pre-programmed to change their UUIDs at regular time intervals. This is done to ensure that UUIDs do not remain static over time, and become harder to spoof.

However, there are two problems with this approach:
a) The change interval of UUIDs is fixed, typically in the order of hours. Therefore, an attacker can identify a window of time wherein the UUID remains static, and still do the spoofing attack. The change interval cannot be made very short (e.g. few seconds), as it would adversely affect communication between beacon transmitters and receivers.
b) The receiver beacon has to communicate with the cloud backend of the manufacturer each time, to authenticate the dynamically changing UUID. E.g. let us say the initial configuration for UUID at the receiver and transmitter was "A", but since the transmitter keeps changing its UUID (e.g. A -> B -> C -> D), the receiver by itself has to way to authenticate if it is listening to the right transmitter beacon or not. Therefore, it must connect with the cloud backend of the manufacturer for authentication each time before establishing a connection to the transmitter. Note that receivers are usually third-party apps implemented in smartphones, and manufacturer cannot share their rotating algorithm with third parties for security reasons.

Finally, existing solution are static, pre-programmed ones, and still leave open the possibility of spoofing attacks on BLE beacons.

### SUMMARY

This summary is provided to introduce concepts related to the present inventive subject matter. This summary is not intended to identify essential features of the claimed subject matter nor is it intended for use in determining or limiting the scope of the claimed subject matter.
In accordance with one embodiment, a method is provided for a monitoring of attacks on a beacon transmitter belonging to a set of beacon transmitters that are able to communicate with each other, the method comprising the following steps in a beacon transmitter:
if a received advertisement message broadcast from an entity is similar to an advertisement message broadcast by the beacon transmitter, generating a reset message, containing specific values for a universally unique identifier, a major identifier and a minor identifier, the specific values of the major identifier and the minor identifier indicating that the reset message is intended for replacing the current value of the universally unique identifier of other beacon transmitters by the specific value of the universally unique identifier,
broadcasting the generated reset message using a short range wireless communication protocol for reception by other beacon transmitters of said set of beacon transmitters.

Advantageously, the invention provides an autonomous and seamless way for beacon transmitters to recognize a spoofing attack, and take steps to act on it instantly in real-time. As this industry matures, such spoofing attacks will become more prominent.

In an embodiment, the short range wireless communication protocol is a low-energy wireless communication protocol.

In an embodiment, the short range wireless communication protocol comprises a Bluetooth Low Energy protocol.

In an embodiment, a spoofing attack is detected when the received advertisement message broadcast from an entity is similar to an advertisement message broadcast by the beacon transmitter.

In an embodiment, the received advertisement message broadcast from the entity is similar to the advertisement message broadcast by the beacon transmitter when the received advertisement message contains an universally unique identifier, a major identifier and a minor identifier identical to those contained in advertisement messages broadcast by the beacon transmitter.

In an embodiment, the beacon transmitter receives a confirmation message from the other beacon transmitters, the confirmation message indicating that they have updated their universally unique identifier.

In an embodiment, the set of beacon transmitters shares the same universally unique identifier and the beacon transmitter connects to an application server located in the cloud backend of the manufacturer of the beacon transmitters to the update the universally unique identifier for the set of beacon transmitters in a central database.

In an embodiment, the updated universally unique identifier is pushed by the application server to communication devices implementing an application related to the set of beacon transmitters.

The invention also pertains to a beacon transmitter for a monitoring of attacks on the beacon transmitter belonging to a set of beacon transmitters that are able to communicate with each other, the beacon transmitter comprising:
means for generating a reset message, containing specific values for a universally unique identifier, a major identifier and a minor identifier, the specific values of the major identifier and the minor identifier indicating that the reset message is intended for replacing the current value of the universally unique identifier of other beacon transmitters by the specific value of the universally unique identifier, if a received advertisement message broadcast from an entity is similar to an advertisement message broadcast by the beacon transmitter,
means for broadcasting the generated reset message using a short range wireless communication protocol for reception by other beacon transmitters of said set of beacon transmitters.

The communication system is able to detect a spoofing attack on a set of beacon transmitters, and then dynamically on-the-fly update the beacon identifiers by means of a special advertisement message, in order to stop the spoofing attack.

The invention also pertains to a computer program capable of being implemented within a beacon transmitter, said program comprising instructions which, when the program is executed within said beacon transmitter, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for a monitoring of attacks on beacon transmitters; and
- FIG. 2 is an algorithm of a method for a monitoring of attacks on beacon transmitters according to one embodiment of the invention.

The following description is directed to techniques and solutions for monitoring attacks on beacon transmitters transmitting beacon messages using a wireless communication protocol (e.g., a low energy wireless communication protocol). For example, beacon messages can be transmitted from a beacon transmitter to one or more mobile devices using a Bluetooth Low Energy wireless communication protocol. However, the techniques and solutions described herein can be applicable to many types of systems wherein a beacon message is wirelessly transmitted from one device to one or more other devices over a relatively short range.

A beacon message refers to a message that is sent, or broadcast, repeatedly or constantly from a transmitting device to an area within a range of the transmitting device to be received by any properly configured receiving device located within that area, and which carries some information associated with the transmitting device or the location of the transmitting device. A beacon message can also be called an advertising message by some protocols, such as Bluetooth Low Energy protocol.

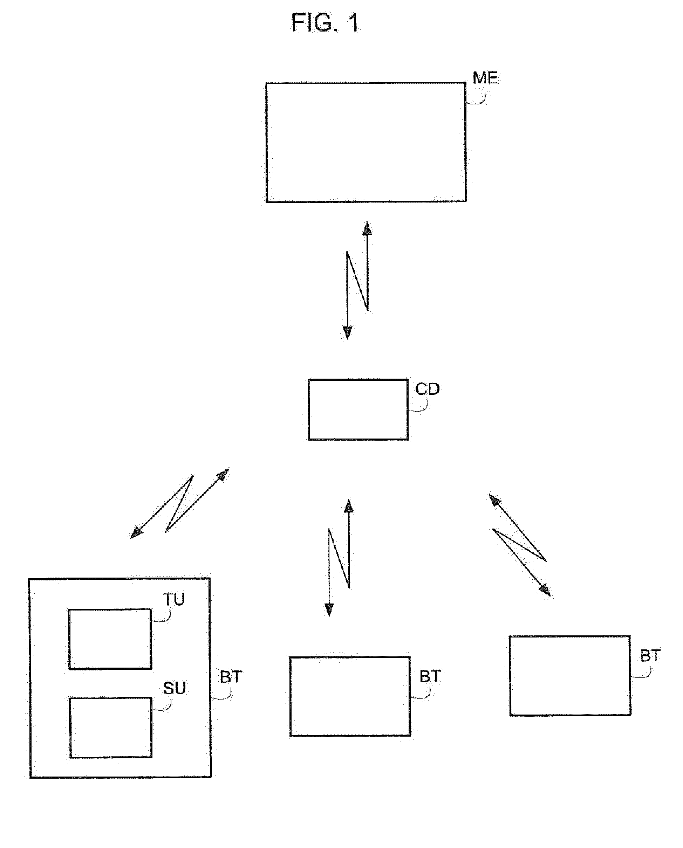

With reference to FIG. 1, a communication system according to the invention comprises an application server AS, a set of beacon transmitters BT, a communication device CD, and a malicious entity ME.

The application server AS is located in the cloud backend of the manufacturer of the beacon transmitters. The application server AS communicates with the set of beacon transmitters BT via a telecommunications network such as Internet or a dedicated network. The application server is responsible for authentication of devices trying to connect to a beacon transmitter for accessing a service offered by this latter.

The beacon transmitter BT emits Bluetooth Low Energy signals and transmits a unique signal multiple times regularly, for example every second, the signal being received by Bluetooth compatible devices within a few meter radius.

The beacon transmitter BT comprises a microcontroller with a Bluetooth Low Energy radio chip and eventually a battery.

The beacon transmitter BT comprises a transmission unit TU that emits a signal with a fixed base power and a fixed advertising interval which defines the rate (frequency) that a signal is emitted.

The beacon transmitter BT comprises a security unit SU able to detect a spoofing attack by a malicious entity and to generate a reset advertisement message to mitigate the spoofing attack.

A malicious entity ME can act as a legitimate beacon transmitter and send 'fake' beacon advertisement signals.

A communication device CD is capable of establishing a communication with one of the beacon transmitters BT or with a malicious entity ME. For instance, a communication device CD is a mobile telephone, a smartphone, or a tablet, an electronic telecommunication device or object that is personal to the user, and is to use the Bluetooth protocol to communicate with Bluetooth entities.

The set of beacon transmitters BT is able to detect a spoofing attack on a beacon group, and then dynamically on-the-fly update the beacon identifiers by means of a special advertisement message, in order to stop the spoofing attack.

To that end, the beacon transmitters use the full-duplex nature supported by the BLE standard - as per which BLE devices can act as both receivers and transmitters. While beacon transmitters are transmitting their presence by means of BLE advertisement messages, they also listen to advertisements from nearby devices. If a beacon device receives an advertisement similar to its own configuration, i.e. same {UUID, Major ID, Minor ID} - it can know that a malicious entity is trying to spoof it.

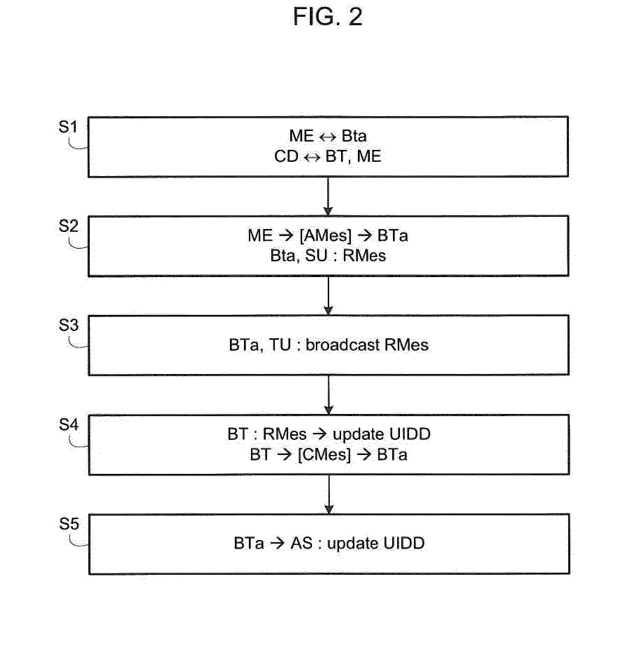

With reference to FIG. 2, a method for a monitoring of attacks on beacon transmitters according to one embodiment of the invention comprises steps S1 to S5 executed within the communication system.

In step S1, a user of a communication device CD is walking through a commercial zone in which a set of beacon transmitters BT and a malicious entity ME are located. The set of beacon transmitters BT shares the same universally unique identifier UUID and are able to communicate with each other.

The malicious entity ME masquerades as one of the beacon transmitters, called attacked beacon transmitter BTa. The malicious entity ME broadcasts advertisement messages AMes containing universally unique identifier UUID, major identifier MajID and minor identifier MinID identical to the identifiers contained in advertisement messages AMes broadcast by the attacked beacon transmitter BTa.

In step S2, the beacon transmitters BT, at the same time as they are advertising, also listen to advertisement messages broadcast from other beacon transmitters BT or other nearby beacon devices.

The security unit SU of the attacked beacon transmitter BTa detects an advertisement message AMes broadcast from the malicious entity ME similar to the advertisement message broadcast by itself. The attacked beacon transmitter BTa is then aware that there is a spoofing attack on it.

The security unit SU of the attacked beacon transmitter BTa generates a reset advertisement message RMes, containing specific values for the universally unique identifier UUID, the major identifier and the minor identifier.

For example, the reset advertisement message RMes has the following values: {UUID: a1e3n6m3k5h7kk89h2j5k1, Major ID: 99, Minor ID: 99}.

The values "99" of the major identifier MajID and the minor identifier MinID indicate that it is message for resetting configuration of the set of beacon transmitters BT with the specific value of the universally unique identifier UUID.

The reset advertisement message RMes generated by the attacked beacon transmitters BT should be understood by other transmitters of the set of beacon transmitters BT that are also be able to verify that it is not a message sent by a spoofer. To ensure this, the set of beacon transmitters BT shares a cryptography mechanism, e.g. private-key cryptography. The attacked beacon transmitters BT can encrypt the universally unique identifier UUID using a private key, and on receiving the message, the other beacon transmitters BT receving the reset advertisement message RMes can again use the private key to decrypt the universally unique identifier UUID and check if it is indeed a valid universally unique identifier UUID. The exact encryption method can depend on the choice of manufacturer of the beacon transmitters.

In step S3, the transmission unit TU of the attacked beacon transmitter BTa uses its transmission capabilities to broadcast the generated reset message RMes using a short range wireless communication protocol, like the Bluetooth Low Energy protocol, for reception by other beacon transmitters of said set of beacon transmitters.

In step S4, on validation of the reset advertisement message RMes, the beacon transmitters BT modify their universally unique identifier UUID with the specific value of the universally unique identifier UUID included in the reset advertisement message RMes.

The beacon transmitters BT send a confirmation message CMes to the attacked beacon transmitter BTa, indicating that they have updated their universally unique identifier UUIDs.

For example, the confirmation message CMes contains dedicated values: {UUID = 2hk21424h2k1h44hk21h4, Major ID = 00, Minor ID = 00}. Here, the values of Major ID, Minor ID suggest that it is a confirmation message, and the value of UUID contains an encrypted text so that the recipient can verify that it is a genuine message.

In step S5, the attacked beacon transmitter BTa connects to the application server AS and update the universally unique identifier UUID for the set of beacon transmitters BT in a central database. This update of universally unique identifier UUID can then be pushed by the application server to all communication devices CD implementing an application related to the set of beacon transmitters BT.

This way, in a completely automatic and seamless way - any spoofing attack on the BLE beacons could be stopped as soon as it is initiated. If the attackers retry the spoofing attack, the system will again change the UUID and will always be a step ahead of the attackers.

In one example, a user with a smartphone application from a restaurant capable of listening to BLE beacons has walked in to a store. Restaurant application is pre-configured to listen to advertisement messages with {UUID = 1234, Major ID = 200 and Minor ID = 1,2,3}. Once the restaurant application receives a BLE advertisement message satisfying this criterion, it establishes connection with the advertisement sender, like the application server AS, and then the sender pushes a restaurant discount coupon to the smartphone.

There are three genuine restaurant beacon transmitters in the store, which are transmitting the UUID = 1234 and major ID = 200. There is also one malicious entity which has read the plain text BLE advertisement messages and is now spoofing one of the restaurant beacon transmitters by copying its advertisement message.

In the absence of the malicious attacker, the restaurant application would have connected to one of the three genuine beacon transmitters, and exchanged a restaurant discount coupon. However, now the attacker - by means of spoofing beacon from the malicious entity - can also connect with the restaurant application - and once the connection is successful - it can perhaps send it a fake coupon or malicious messages.

By means of the method described above, the attacked beacon transmitter can dynamically on-the-fly update the beacon identifiers by means of a reset advertisement message, in order to stop the spoofing attack.

The invention described here relates to a method and a transmitter for monitoring attacks on beacon transmitters. According to one implementation of the invention, the steps of the invention are determined by the instructions of a computer program incorporated into the transmitter, such as the beacon transmitter BT. The program comprises program instructions which, when said program is loaded and executed within the device, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for a monitoring of attacks on a beacon transmitter belonging to a set of beacon transmitters that are able to communicate with each other, the method comprising the following steps in a beacon transmitter (BTa):
if a received advertisement message broadcast from an entity (ME) is similar to an advertisement message broadcast by the beacon transmitter (BTa), generating (S2) a reset message (RMes), containing specific values for a universally unique identifier, a major identifier and a minor identifier, the specific values of the major identifier and the minor identifier indicating that the reset message is intended for replacing the current value of the universally unique identifier of other beacon transmitters (BT) by the specific value of the universally unique identifier,
broadcasting (S3) the generated reset message (RMes) using a short range wireless communication protocol for reception by other beacon transmitters of said set of beacon transmitters.

2. A method according to claim 1, whereby the short range wireless communication protocol is a low-energy wireless communication protocol.

3. A method according to claim 1 or 2, whereby the short range wireless communication protocol comprises a Bluetooth Low Energy protocol.

4. A method according to any of the claims 1 to 3, whereby a spoofing attack is detected when the received advertisement message broadcast from an entity (ME) is similar to an advertisement message broadcast by the beacon transmitter (BTa).

5. A method according to any of the claims 1 to 4, whereby the received advertisement message broadcast from the entity (ME) is similar to the advertisement message broadcast by the beacon transmitter (BTa) when the received advertisement message contains an universally unique identifier, a major identifier and a minor identifier identical to those contained in advertisement messages broadcast by the beacon transmitter.

6. A method according to any of the claims 1 to 5, whereby the beacon transmitter (BTa) receives a confirmation message (CMes) from the other beacon transmitters (BT), the confirmation message (CMes) indicating that they have updated their universally unique identifier.

7. A method according to any of the claims 1 to 6, whereby the set of beacon transmitters (BT) shares the same universally unique identifier and the beacon transmitter (BTa) connects to an application server (AS) located in the cloud backend of the manufacturer of the beacon transmitters to the update the universally unique identifier for the set of beacon transmitters in a central database.

8. A method according to claim 7, whereby the updated universally unique identifier is pushed by the application server to communication devices implementing an application related to the set of beacon transmitters (BT).

9. A beacon transmitter (BT) for a monitoring of attacks on the beacon transmitter belonging to a set of beacon transmitters that are able to communicate with each other, the beacon transmitter comprising:
means (SU) for generating a reset message (RMes), containing specific values for a universally unique identifier, a major identifier and a minor identifier, the specific values of the major identifier and the minor identifier indicating that the reset message is intended for replacing the current value of the universally unique identifier of other beacon transmitters (BT) by the specific value of the universally unique identifier, if a received advertisement message broadcast from an entity (ME) is similar to an advertisement message broadcast by the beacon transmitter,
means (TU) for broadcasting the generated reset message (RMes) using a short range wireless communication protocol for reception by other beacon transmitters of said set of beacon transmitters.

10. A computer program capable of being implemented within a beacon transmitter for a monitoring of attacks on the beacon transmitter belonging to a set of beacon transmitters that are able to communicate with each other, said program comprising instructions which, when the program is loaded and executed within said beacon transmitter, implement a method as claimed in any of claims 1 to 8.
